# EUROPEAN PATENT SPECIFICATION

(11) **EP 2 069 844 B1**
(45) Date of publication and mention of the grant of the patent: **12.07.2017**
(21) Application number: 08754221.3
(22) Date of filing: 06.05.2008
(51) Int. Cl.: G02B 6/44

(54) **OPTICAL CABLE**
OPTISCHES KABEL
CÂBLE OPTIQUE

(30) Priority: 08.05.2007 US 800879
(43) Date of publication of application: 17.06.2009
(73) Proprietor: Corning Optical Communications LLC, Corning, NY 14831 (US)
(72) Inventor: HURLEY, William C, Hickory, NC 28601 (US); KUNDIS, Dieter E, 96486 Lautertal (DE); MERBACH, Gerhard, 96465 Neustadt Bei Coburg (DE); WUENSCH, Guenter, 96465 Neustadt/Coburg (DE)
(74) Representative: Epping - Hermann - Fischer
(86) International application number: PCT/US2008/005797
(87) International publication number: WO 2008/137151

(56) References cited:
- WO-A-2006/107687
- FR-A- 2 559 592
- JP-A- S6 014 209
- US-A- 6 067 394
- US-A1- 2004 109 650
- US-A1- 2005 244 114
- US-B1- 7 035 511

## Description

### Field of the Invention

The present invention relates to an optical cable to be used for indoor and/or outdoor applications.

### Background of Invention

In the wiring of premises with fiber optic cables, so-called drop cables are used for routing optical fibers to houses, apartments and multi-dwelling units. A drop cable may be adapted for being laid in outdoor as well as indoor areas. In the outdoor area a drop cable may be used as an aerial cable suited for a short span length. A drop cable may also be laid in the soil for making optical connections from a service provider's demarcation point to the end user.

A drop cable should fulfill certain requirements. The cable should be small enough to route easily through the premises, but large enough to be easy to handle. During the installation the cable often has to be bent around corners outside or inside of the premises. Hence, the cable should be easy to bend and have little to no bend memory or springiness. Furthermore, it should be possible to bend the cable with a small radius without a high increase of optical attenuation. The cable design should limit the bend radius experienced by the fiber. Furthermore, it is required that the cable is amenable to field connectorization and also tough enough to sustain being pinched by staples or tightly pulled tie wraps. In order to comply with national and local building safety codes for indoor use, materials surrounding the optical fibers should be fire-retardant. The drop cable should have, for example, an OFC (optical fiber conducting) or OFN (optical fiber non-conducting) flame rating.

Compressive loads are effective on the cable, if the cable is fixed to a mast or a house wall by staples or if the cable is spanned between eyelets. Tensile loading mainly occurs when the material of a layer of the optical cable, for example the material of the cable jacket, shrinks after an extrusion process. The drop cable should be designed such that optical fibers are not considerably influenced by compressive and tensile stress.

### Summary of the Invention

The present invention is defined in claim 1. Preferred embodiments are defined in the dependent claims.

The numerous features and advantages of the present invention will be readily apparent from the following detailed description read in conjunction with the accompanying drawings.

### Brief Description of the Drawings

Figure 1 shows a cross-section of an optical cable used as a drop cable for indoor and/or outdoor applications according to the present invention.
Figure 2 shows a cross section of another optical cable used as a drop cable for indoor and/or outdoor applications according to the present invention.
Figure 3 shows an optical cable with a connector crimped thereon.
Figure 4 is a graph showing the attenuation of a single mode fiber of different types as a function of the bend radius.
Figure 5 shows a production line for producing an optical cable according to the present invention.
Figure 6 shows a cross-sectional representation of a bend performance optical fiber suitable for use with the present invention.
Figure 7 shows a cross-sectional image of a bend performance bend performance optical fiber illustrating an annular hole-containing region comprised of non-periodically disposed holes.

### Detailed Description of the Invention

The invention is defined in claim 1.

Various aspects of the disclosure will now be described more fully hereinafter with reference to the accompanying drawings. These aspects are provided so that the disclosure will fully convey the scope of the invention to those skilled in the art. Only those parts of the disclosure which fall within the scope of the appended claims form part of the present invention. Thus the term "embodiment" employed in the description does not automatically imply that this is an embodiment of the invention defined by claim 1. The drawings are not necessarily drawn to scale but are configured to clearly illustrate the invention. The same reference signs will be used for the same or corresponding elements in different figures.

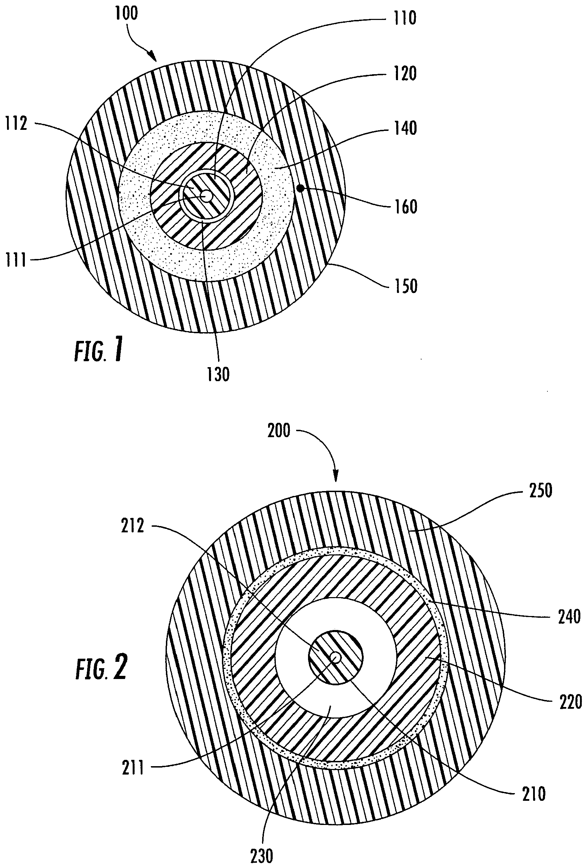

Figure 1 illustrates a cross-sectional view of an embodiment of an optical cable 100. The optical cable comprises a buffered optical fiber 110 which may be a tight buffered optical fiber. The buffered optical fiber comprises a fiber core 111 and a buffer layer 112. The buffered optical fiber is arranged within a buffer tube 120 which surrounds the buffered optical fiber 110. A gap 130 is formed between the buffered optical fiber 110 and the buffer tube 120. The gap between the optical fiber 110 should be less than 100 µm to prevent a buckling of the buffered optical fiber 110. In order to block a flow of water along the buffered optical fiber, a water-swellable powder or a gel may be disposed on the buffered optical fiber. The buffer tube 120 is surrounded by strength member elements 140. The strength member elements are preferably yarns of aramid or fiberglass. A cable jacket 150 is disposed around the strength member elements 140. The cable jacket includes a ripcord 160 embedded in the material of the jacket. The ripcord is used to remove the jacket before a splice process is established to connect the optical fiber with another waveguide.

The cable jacket 150 comprises a thermoplastic polymer material which is extruded around the strength member elements 140. During the extrusion process the thermoplastic polymer material is heated and the hot polymer melt is disposed around the strength member elements. Afterwards, the hot polymer melt is cooled down to harden the polymer material. The cooling of the polymer material causes a shrinking of the cable jacket. However, in order to not degrade the optical transmission properties of the buffered optical fiber and, for example, to prevent an increase of attenuation of the buffered optical fiber, it is useful to inhibit the shrinking forces of the cable jacket caused by the cooling of the polymer material from being transferred to the buffered optical fiber.

To this purpose, the buffer tube 120 is formed such that the shrinking forces of the cable jacket 150 are at least partialy compensated by the buffer tube and are thereby not transferred to the buffered optical fiber 110. The buffer tube 120 is preferably made of a stiff thermoplastic material. For instance, a material having a high elasticity modulus is well suited for forming the buffer tube. In a comparative example, the elasticity modulus of the material of the buffer tube is chosen in a range between about 2100 N/mm² to about 2700 N/mm². Experiments show that a suitable material for the buffer tube to at least partialy compensate the shrinking forces of the cable jacket has an elasticity modulus of about 2400 N/mm². Especially a thermoplastic material having an elasticity modulus of about 2400 N/mm² and an expansion coefficient of about 50 x 10⁻⁶ % change of length per temperature change of 1 K is considered as being well suited.

The buffer tube 120 should be provided having a low thermal expansion coefficient. A material is chosen for the buffer tube 120 with an expansion coefficient in the range between about 30 x 10⁻⁶ % to about 80 x 10⁻⁶ % change of length per temperature change of 1 K, wherein the material of the buffer tube is preferably chosen with an expansion coefficient of about 50 x 10⁻⁶ % change of length per temperature change of 1 K.

The jacket may be formed of a FRNC-(flame retardant non corrosive)-material to fulfill the requirements of an LS0H- (low smoke zero halogen)-cable. As an example of an FRNC-material, a matrix polymer of polyethylene including ethyl-vinyl-acetate may be used. Flame retardant agents, such as 30 % to 60 % aluminium hydroxide or magnesium hydroxide may be embedded in the matrix polymer material of the jacket. As concerns the buffer tube, a thermoplastic polymer, such as a polycarbonate acrylonitrile butadiene styrol blend, may be used as an appropriate material.

Another important parameter to provide a buffer tube suited to assimilate a compressive and tensile loading is the respective thickness of the buffer tube 130 and the jacket 150. The thickness of the jacket 150 is preferably chosen in a range between about 0.5 mm to about 1 mm. The thickness of the buffer tube is adjusted in dependence on the thickness of the jacket such that the shrinking forces occurring when the material of the cable jacket is cooled down after the extrusion process are compensated by the buffer tube. To this purpose, the thickness of the buffer tube is chosen to be in a range between 0.25 mm to 0.75 mm. An optical cable comprising a cable jacket of an FRNC-material and having a thickness of about 0.7 mm is preferably provided with a buffer tube having a thickness of about 0.5 mm. The optical cable shown in Figure 1 has a diameter of about 5 mm wherein the buffer tube has an inner diameter of 1 mm and an outer diameter of 2 mm.

The thermoplastic polymer material of the buffer tube is formed to a tube surrounding the buffered optical fiber 110 by an extrusion process. Providing of a gap 130 inhibits the buffered optical fiber 110 from sticking to the polymer melt of the buffer tube 120 when the buffer tube is extruded. The gap 130 between the optical fiber 110 should be as small as possible. A gap in a range between 40 µm and 100 µm allows that compressive forces due to a lateral pressure on the cable jacket from readily being transferred to the buffered optical fiber. The gap is preferably provided with a distance of about 40 µm between the buffered optical fiber 110 and the buffer tube 130 to prevent a buckling of the optical fiber when the material of the cable jacket cools down. Furthermore, providing the gap allows the buffer tube to easily be stripped off for connectorization or splicing of the buffered optical fiber to another waveguide, because the material of the buffer tube is not in direct contact with the buffered optical fiber.

If the optical cable as shown in Figure 1 is used as aerial cable, a supporting wire, such as used in a Figure-8-cable may be added which allows an increase in the span length of the cable.

Figure 2 illustrates a cross-sectional view of an optical cable 200 having a diameter of about 4 mm to 5 mm. The optical cable comprises a buffered optical fiber 210 which is a tight buffered optical fiber. The buffered optical fiber 210 comprises a fiber core 211 and a buffer layer 212. The buffer layer may be made of a UV-curable polymer material. The buffered optical fiber is arranged within a buffer tube 220 which surrounds the buffered optical fiber. In the form of a tight buffered optical fiber, the optical fiber 210 has a diameter such as 500 µm, 700 µm or 900 µm wherein the use of a tight buffered optical fiber having a diameter of 900 µm is preferred. A buffered optical fiber provided as a 500 µm UV curable upcoat under a 900 µm tight buffer may also be used and offers protection for the optical fiber. The optical fiber may be configured to possess excess fiber length that could provide a tensile window for the cable to reduce the fiber strain on a connector when a tensile load is applied.

A slip layer formed, for example, by a silicone compound may be added to the material of the tight buffered optical fiber. The silicone compound will migrate to the surface of the tight buffered optical fiber in order to prevent the optical fiber 210 from sticking to the buffer tube 220.

The buffer tube 220 is extruded around the tight buffered optical fiber 210 such that a small gap 230 is formed between the buffered optical fiber 210 and the buffer tube 220. The gap 220 between the buffered optical fiber 210 and the buffer tube 220 should be in a range between about 0.05 mm to about 0.5 mm, wherein a range of about 0.1 mm to about 0.2 mm is preferred. The small amount of free space makes it easy to couple the buffered optical fiber to the buffer tube when connectorizing by bending the cable. Furthermore, the gap 230 prevents the buffered optical 210 fiber from sticking to the buffer tube 220 when the buffer tube is extruded to surround the buffered optical fiber 210. The gap allows the buffered optical fiber some freedom of movement to redistribute compressive and tensile loads along its length and allows an improved crush performance. Increasing the gap allows the buffered optical fiber to lay straight at the point where the crush load is applied.

In order to prevent an expansion of water along the buffered optical fiber, a finely ground, water-blocking powder is disposed between the buffered optical fiber 210 and the buffer tube 220. The powder also prevents the buffered optical fiber from sticking to the buffer tube when the buffer tube 220 is extruded around the buffered optical fiber 210, and also blocks a flow of water between the buffered optical fiber and the buffer tube. The water-swellable material may also be included in a tape wrapped around buffered optical fiber 210, or in a yarn placed in the gap 230. It is also possible to provide a gel that is directly disposed on the buffered optical fiber to seal the space within the buffer tube.

A foamed filling material may be placed between the optical fiber 210 and the buffer tube 220. Embedding the optical fiber into the foamed material may improve the crush resistance of the cable.

The buffer tube is preferably made from a fire-retardant polyethylene material. In order to adjust the stiffness, the flexibility, or crush resistance of the optical cable, also other thermoplastic materials such as polyvinyl chloride, polyvinylidene fluoride, polypropylene or polybutylene-therepthalate may be used as appropriate materials for the buffer tube.

A cable jacket 250 is disposed around buffer tube 220 and thereby forms an outer layer of the optical cable 200. The materials for the buffer tube 220 and the cable jacket 250 should be chosen to meet local fire safety codes in the United States and/or Europe. These codes are generally met in Europe with fire-retardant polyethylene materials (FRPE) and in the United States with materials of polyvinyl chloride (PVC). Other materials may be used, such as nylon, polyurethane, or polyvinylidene fluoride. Experiments have shown that a buffer tube comprising polypropylene and a jacket comprising polyvinyl chloride are sufficient to meet the requirements for a riser rated cable. Furthermore, a buffer tube comprising polypropylene offers good protection for the buffered optical fiber during crush testing. Polyurethane and thermoplastic urethane jackets provide excellent toughness to the cable during crush loads. One embodiment of a cable to meeting US codes would have a polypropylene buffer tube with an outdoor-rated PVC jacket, such as AG2271, which is commercially available from Alpha Gary Corporation of Leominster, Massachusetts. The jacket material could be changed to increase the fire-retardance sufficiently for the cable to achieve a riser or plenum flame rating.

Also other materials may be used for the buffer tube and the jacket but they need to maintain specific relationships between the strengths of the materials and amount of the materials used. According to the invention, the buffer tube is made of stiff PVC and a jacket made with soft PVC. In a cable with the same size buffer tube and jacket given above, the cross section area of the jacket is about four times the cross section area of the buffer tube. Therefore, the modulus of the buffer tube is to be more than four times the modulus of the jacket. A firm PVC buffer tube with an elasticity modulus in the range of 3500 N/mm² to 4000 N/mm² is used with a soft PVC jacket with an elasticity modulus in the range of 800 N/mm² to 990 N/mm².

As illustrated in Figure 2, a layer of strength member elements 240 may be disposed between buffer tube 220 and cable jacket 250. The handling characteristics of the cable may be improved by having sufficient coupling between the strength member elements 240 and the cable jacket 250. The desired level of coupling will depend on how roughly the cable is treated during installation and the design of a connector that will be placed on the cable.

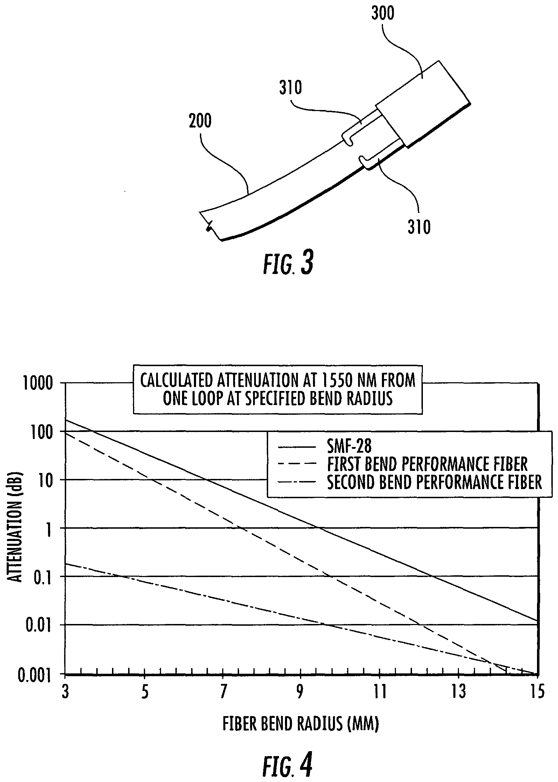

If the strength members 240 are well bonded to the jacket 250, the connector may be designed to simply bond to the cable jacket, such as a crimp-on style connector. Figure 3 shows the optical cable 200 wherein a connector 300 is attached to an end of the optical cable. The connector 300 comprises clamps 310 which allows the connector to directly crimp to the cable jacket 250.

The bonding between the strength members and the jacket may be achieved by using a material that easily bonds to the strength members. The strength members may be bonded to a fire retardant thermoplastic urethane jacket material or may be bonded by adding adhesion promoters to the surface of the strength members.

It is also possible to provide the optical cable 200 having a low level of bonding between the jacket and the strength members. In this case, connector designs may be used which separate the strength members from the cable jacket and crimp the strength members directly to the connector body. The desired level of bonding will be determined by testing the connectorized assembly.

Aramid yarns or fiberglass yarns may be used as appropriate strength member elements. The strength members could also be chosen to allow the use of a simple tool to ring cut the cable from the outer jacket through the buffer tube for easy termination of the cable. The use of yarns of polyvinyl ketone or ultra high molecular weight polyethylene provide strength to the cable and allow an easy cutting. Fiberglass yarns could also be used to provide this effect.

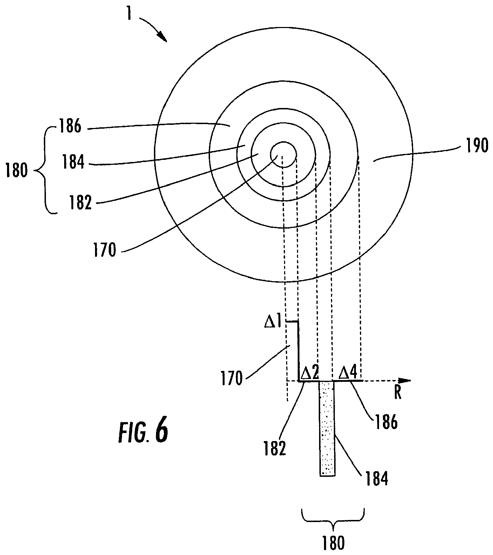

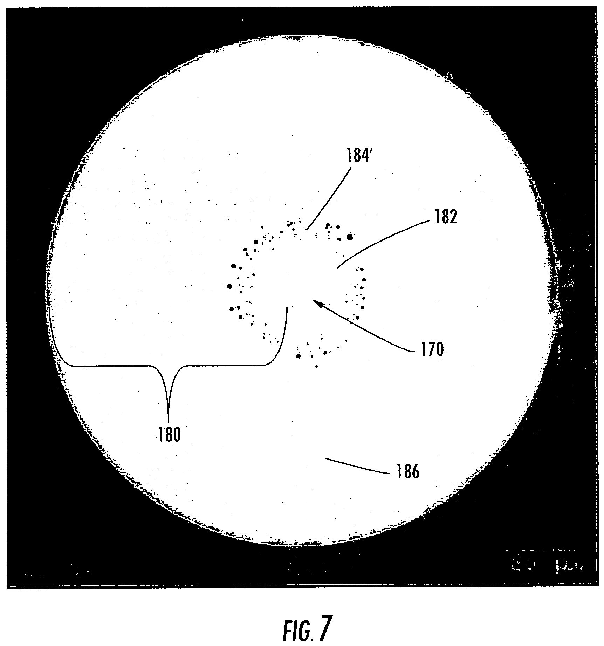

Figure 4 illustrates a graph showing bend attenuation for three different single-mode fibers as the bend radius is changed. The bend attenuation is calculated at 1550 nm from one loop at the specified bend radius. The cable designs of the present invention limits the bend radius of the fiber to 5 mm even if the cable is folded back on itself. An improved bending fiber, such a first bend performance fiber developed by Corning, Inc. would have about one-third of the attenuation of a conventional single-mode fiber such as a SMF-28 fiber as shown. A second bend performance fiber as shown and discussed in Figures 6 and 7 has only about 0.2 % as much attenuation as the standard single-mode fiber in a bend of 5 mm radius. If the power budget of the network allows only one or two decibel of optical attenuation for the interconnect cable, the second bend performance fiber would meet the requirement.

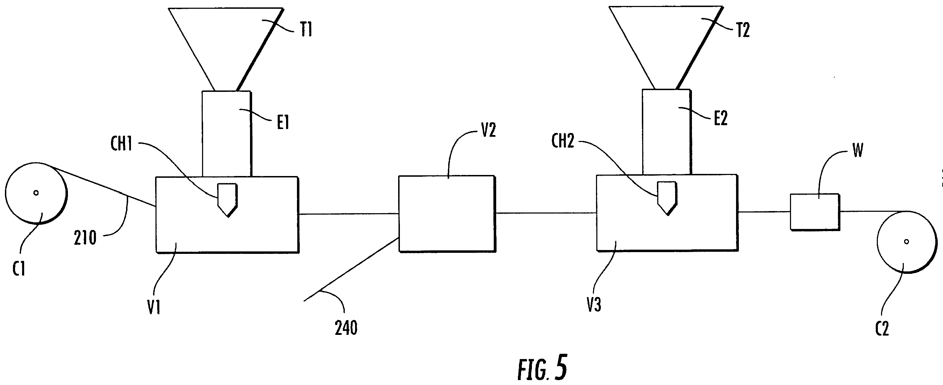

Figure 5 shows a production line for manufacturing the optical cable 200. The production line comprises a manufacturing unit V1, V2 and V3. A buffered optical fiber 210 provided on a coil C1 is fed to the manufacturing unit V1. The buffered optical fiber may be a tight buffered optical fiber comprising a cladding 212 of a UV-curable polymer material and having a diameter between about 500 µm to about 900 µm. A tank T1 is in connection with an extruder E1. The tank T1 may be filled with a fire retardant polyethylene material (FRPE). Preferred materials are, for example, one of polyvinyl chloride, nylon, polyurethane, polyprophylene, polyvinylidene fluoride and polybutylene or a combination thereof.

After heating the thermoplastic material, the hot polymer melt is extruded around the buffered optical fiber 210 by a crosshead CH1 which is in connection to the extruder E1 to form a buffer tube 220. The crosshead CH1 is adjusted such that a gap 230 being established between buffered optical fiber 210 and buffer tube 220. The gap is small wherein a distance between the outer surface of the buffered optical fiber 210 and the buffer tube is in a range between about 0.05 mm and 0.5 mm, preferably in a range between 0.10 mm and 0.20 mm.

The manufacturing unit V1 may also be used to wrap a tape around buffered optical fiber 210 or to place several yarns in the gap. The tape and the yarns comprise a water swellable material to allow blocking of a flow of water within the buffer tube 220. The yarns may also provide tensile strength. To the same purpose, it is also possible to dispose a water-swelling powder within buffer tube 220 by the manufacturing unit V1.

The buffer tube 220 with the embedded buffered optical fiber 210 is fed to a manufacturing unit V2. Furthermore, manufacturing unit V2 also receives strength member elements 240. The strength member elements may be yarns one of aramide, polyvinyl ketone, ultra high molecular weight polyethylene or fiberglass. The strength member elements 240 are arranged around the buffer tube 220.

The production line comprises a manufacturing unit V3 which is in connection with an extruder E2. The extruder E2 is fed by a polymer material which is filled in a tank T2. The polymer material is heated and extruded around buffer tube 220 and strength member elements 240 by a crosshead CH2 to form a cable jacket 250. The tank T2 may contain a thermoplastic urethane having fire retardant agents (FR TPU). Also other materials, such as nylon, polyurethane, polyprophylene, polyvinylidene fluoride, polybutylene and polyvinyl chloride or a combination thereof may be extruded around buffer tube 220 and the strength member elements 240 to increase the fire retardant sufficiently for the cable to achieve a riser or plenum flame rating.

The strength members are coupled to the cable jacket by the manufacturing unit V3. This may be achieved by using a jacket material that easily bonds to the strength members, such as thermoplastic polyurethane, or by adding adhesion promoters to the surface of the strength members. A water bath W is arranged in the production line behind manufacturing unit V3. When the extrusion process of the cable jacket is finished, the cable runs through the water bath W to cool down before it is rolled up on a coil C2.

When the polymer melt of the cable jacket is cooled, the material begins to shrink. If the shrinking of the cable jacket is transferred to the buffered optical fiber, the transmission properties may deteriorate by an increase of attenuation. It has shown that a buffer tube made of a polycarbonate acrylonitrile butadiene styrol blend is well suited to compensate the shrinking forces of the cooling jacket material. Therefore, tank T1 may also be filled by a thermoplastic polymer material, such as a polycarbonate acrylonitrile butadiene styrol blend. When using a polycarbonate acrylonitrile butadiene styrol blend the crosshead CH2 is preferably adjusted such that the gap between the buffered optical fiber and the buffer tube is in a range between about 40 µm to 100 µm to prevent the buffered optical fiber from sticking to the buffer tube and to allow that the fiber lay straight and not in an undulated manner within the buffer tube.

A buffer tube made of a polycarbonate acrylonitrile butadiene styrol blend is preferably used in combination with a cable jacket comprising a flame retardant non-corrosive polymer material such as a matrix polymer made of polyethylene comprising ethyl-vinyl-acetate and additives having flame retardant properties. The tank T2 may be filled with this matrix polymer, wherein the additives may be aluminium hydroxide or magnesium hydroxide with a mass portion of 30 % to 60 % of the mass of the matrix material.

The cable design described above may be used as a drop cable for indoor/outdoor applications. The cable meets the requirements of being easy to handle because of its size and its flexibility. The hard buffer tube protects the optical fiber when the cable is stapled to a wall during installation or when held down by tie wraps. The size of the cable naturally limits the bending of the fiber ensuring that the fiber bend radius is 5 mm or greater. The cable will have little bend memory because it does not have rigid components. The materials of the cable will be sufficiently fire-retardant to achieve an OFN flame rating.

Furthermore, field connectorization is simplified by the cable design. An installer is not required to separate the strength members from the outer jacket of the cable, crimp the strength members to the connector body, and then attach a boot that covers the exposed space between the connector body and the cable jacket. In order to easily connectorize the cable, the strength members are bonded to the cable jacket that can be coupled to a crimp-on style connector. The tight buffered optical fiber also assists in connectorization. The bond between the strength members may be increased by adding of adhesion promoters to the strength members. Furthermore, the adhesion promoters could induce the jacket material to adhere to the buffer tube that could make the cable more rugged.

The optical cable has the advantages of being more rugged than current interconnect cables, more flexible than current drop cables and sized for easy handling. Additionally, the cable may be bent sharply around corners without inducing unacceptable attenuation losses in the optical fibers.

While this description discusses the invented fiber optic cable with examples of bend performance optical fiber, as well as other, non-claimed aspects, it is to be understood that other suitable optical fiber types may be employed including, but not limited to, single mode, multi-mode, bend performance fiber, bend optimized fiber, bend insensitive optical fiber, micro-structured optical fiber, and nano-strucutred optical fiber, among others. Examples of micro-structured and nano-strucutred bend performance optical fibers are available from Corning, Inc of Corning, New York, and are depicted in Figures 6 and 7. Referring now to Figure 6, one example of a bend performance optical fiber 1 suitable for use in the present invention is shown. The fiber is advantageous in that it allows aggressive bending while optical attenuation remains extremely low. As shown, bend performance optical fiber 1 is an optical fiber having a core region and a cladding region surrounding the core region, the cladding region comprising an annular hole-containing region comprised of non-periodically disposed holes such that the optical fiber is capable of single mode transmission at one or more wavelengths in one or more operating wavelength ranges. The core region and cladding region provide improved bend resistance, and single mode operation at wavelengths preferably greater than or equal to 1500 nm, in some embodiments also greater than about 1310 nm, in other embodiments also greater than 1260 nm. The optical fibers provide a mode field at a wavelength of 1310 nm preferably greater than 8.0 microns, more preferably between about 8.0 and 10.0 microns. The bend performance optical fiber illustrated is a single-mode transmission optical fiber, but the concepts are applicable to multi-mode optical fibers.

In some non-claimed embodiments, the optical fibers disclosed herein comprises a core region disposed about a longitudinal centerline, and a cladding region surrounding the core region, the cladding region comprising an annular hole-containing region comprised of non-periodically disposed holes, wherein the annular hole-containing region has a maximum radial width of less than 12 microns, the annular hole-containing region has a regional void area percent of less than about 30 percent, and the non-periodically disposed holes have a mean diameter of less than 1550 nm.

By "non-periodically disposed" or "non-periodic distribution", it will be understood to mean that when one takes a cross-section (such as a cross-section perpendicular to the longitudinal axis) of the optical fiber, the non-periodically disposed holes are randomly or non-periodically distributed across a portion of the fiber. Similar cross sections taken at different points along the length of the fiber will reveal different cross-sectional hole patterns, i.e., various cross-sections will have different hole patterns, wherein the distributions of holes and sizes of holes do not match. That is, the holes are non-periodic, i.e., they are not periodically disposed within the fiber structure. These holes are stretched (elongated) along the length (i.e. in a direction generally parallel to the longitudinal axis) of the optical fiber, but do not extend the entire length of the entire fiber for typical lengths of transmission fiber.

For a variety of applications, it is desirable for the holes to be formed such that greater than about 95% of and preferably all of the holes exhibit a mean hole size in the cladding for the optical fiber which is less than 1550 nm, more preferably less than 775 nm, most preferably less than 390 nm. Likewise, it is preferable that the maximum diameter of the holes in the fiber be less than 7000 nm, more preferably less than 2000 nm, and even more preferably less than 1550 nm, and most preferably less than 775 nm. In some embodiments, the fibers disclosed herein have fewer than 5000 holes, in some embodiments also fewer than 1000 holes, and in other embodiments the total number of holes is fewer than 500 holes in a given optical fiber perpendicular cross-section. Of course, the most preferred fibers will exhibit combinations of these characteristics. Thus, for example, one particularly preferred embodiment of optical fiber would exhibit fewer than 200 holes in the optical fiber, the holes having a maximum diameter less than 1550 nm and a mean diameter less than 775 nm, although useful and bend resistant optical fibers can be achieved using larger and greater numbers of holes. The hole number, mean diameter, max diameter, and total void area percent of holes can all be calculated with the help of a scanning electron microscope at a magnification of about 800X and image analysis software, such as ImagePro, which is available from Media Cybernetics, Inc. of Silver Spring, Maryland, USA.

The optical fibers disclosed herein may or may not include germania or fluorine to also adjust the refractive index of the core and or cladding of the optical fiber, but these dopants can also be avoided in the intermediate annular region and instead, the holes (in combination with any gas or gases that may be disposed within the holes) can be used to adjust the manner in which light is guided down the core of the fiber. The hole-containing region may consist of undoped (pure) silica, thereby completely avoiding the use of any dopants in the hole-containing region, to achieve a decreased refractive index, or the hole-containing region may comprise doped silica, e.g. fluorine-doped silica having a plurality of holes.

In one set of non-claimed embodiments, the core region includes doped silica to provide a positive refractive index relative to pure silica, e.g. germania doped silica. The core region is preferably hole-free. As illustrated in Figure 1, in some embodiments, the core region 170 comprises a single core segment having a positive maximum refractive index relative to pure silica Δ₁ in %, and the single core segment extends from the centerline to a radius R₁. In one set of embodiments, 0.30% < Δ₁ < 0.40%, and 3.0 µm < R₁ < 5.0 µm. In some embodiments, the single core segment has a refractive index profile with an alpha shape, where alpha is 6 or more, and in some embodiments alpha is 8 or more. In some embodiments, the inner annular hole-free region 182 extends from the core region to a radius R₂, wherein the inner annular hole-free region has a radial width W12, equal to R2 - R1, and W12 is greater than 1 µm. Radius R2 is preferably greater than 5 µm, more preferably greater than 6 µm. The intermediate annular hole-containing region 184 extends radially outward from R2 to radius R3 and has a radial width W23, equal to R3 - R2. The outer annular region 186 extends radially outward from R3 to radius R4. Radius R4 is the outermost radius of the silica portion of the optical fiber. One or more coatings may be applied to the external surface of the silica portion of the optical fiber, starting at R4, the outermost diameter or outermost periphery of the glass part of the fiber. The core region 170 and the cladding region 180 are preferably comprised of silica. The core region 170 is preferably silica doped with one or more dopants. Preferably, the core region 170 is hole-free. The hole-containing region 184 has an inner radius R2 which is not more than 20 µm. In some embodiments, R2 is not less than 10 µm and not greater than 20 µm. In other embodiments, R2 is not less than 10 µm and not greater than 18 µm. In other embodiments, R2 is not less than 10 µm and not greater than 14 µm. Again, while not being limited to any particular width, the hole-containing region 184 has a radial width W23 which is not less than 0.5 µm. In some embodiments, W23 is not less than 0.5 µm and not greater than 20 µm. In other embodiments, W23 is not less than 2 µm and not greater than 12 µm. In other embodiments, W23 is not less than 2 µm and not greater than 10 µm.

Such fiber can be made to exhibit a fiber cutoff of less than 1400 nm, more preferably less than 1310 nm, a 20 mm macrobend induced loss at 1550 nm of less than 1 dB/turn, preferably less than 0.5 dB/turn, even more preferably less than 0.1 dB/turn, still more preferably less than 0.05 dB/turn, yet more preferably less than 0.03 dB/turn, and even still more preferably less than 0.02 dB/turn, a 12 mm macrobend induced loss at 1550 nm of less than 5 dB/turn, preferably less than 1 dB/turn, more preferably less than 0.5 dB/turn, even more preferably less than 0.2 dB/turn, still more preferably less than 0.01 dB/turn, still even more preferably less than 0.05 dB/turn, and a 8 mm macrobend induced loss at 1550 nm of less than 5 dB/turn, preferably less than 1 dB/turn, more preferably less than 0.5 dB/turn, and even more preferably less than 0.2 dB-turn, and still even more preferably less than 0.1 dB/turn.

One example of a suitable fiber is illustrated in Figure 7, and comprises a core region that is surrounded by a cladding region that comprises randomly disposed voids which are contained within an annular region spaced from the core and positioned to be effective to guide light along the core region. Other optical fibers and micro-structured fibers may be used in the present invention. Additional description of micro-structured fibers used in the present invention are disclosed in pending U.S. Patent Application Serial No. 11/583,098 filed October 18, 2006; and, Provisional U.S. patent application serial numbers 60/817,863 filed June 30, 2006; 60/817,721 filed June 30, 2006; 60/841,458 filed August 31, 2006; and 60/841,490 filed August 31, 2006; all of which are assigned to Corning Incorporated.

Another example of bend performance fiber that may be used in the present invention is bend resistant multimode optical fiber also available from Corning, Inc, that comprises a graded-index core region and a cladding region surrounding and directly adjacent to the core region, the cladding region comprising a depressed-index annular portion comprising a depressed relative refractive index, relative to another portion of the cladding (which preferably is silica which is not doped with an index of refraction altering dopant such as germania or fluorine). Preferably, the refractive index profile of the core has a parabolic shape. The depressed-index annular portion may comprise glass comprising a plurality of holes, fluorine-doped glass, or fluorine-doped glass comprising a plurality of holes. The depressed index region can be adjacent to or spaced apart from the core region.

In some non-claimed embodiments that comprise a cladding with holes, the holes can be non-periodically disposed in the depressed-index annular portion. By "non-periodically disposed" or "non-periodic distribution", we mean that when viewed in cross section (such as a cross section perpendicular to the longitudinal axis) of the optical fiber, the non-periodically disposed holes are randomly or non-periodically distributed across the hole containing region. Cross sections taken at different points along the length of the fiber will reveal different cross-sectional hole patterns, i.e., various cross sections will have different hole patterns, wherein the distributions of holes and sizes of holes do not match. That is, the voids or holes are non-periodic, i.e., they are not periodically located within the fiber structure. These holes are stretched (elongated) along the length (i.e. parallel to the longitudinal axis) of the optical fiber, but do not extend the entire length of the entire fiber for typical lengths of transmission fiber.

The multimode optical fiber disclosed herein exhibits very low bend induced attenuation, in particular very low macrobending. In some embodiments, high bandwidth is provided by low maximum relative refractive index in the core, and low bend losses are also provided. In some embodiments, the core radius is large (e.g. greater than 20 µm), the core refractive index is low (e.g. less than 1.0%), and the bend losses are low. Preferably, the multimode optical fiber disclosed herein exhibits a spectral attenuation of less than 3 dB/km at 850 nm.

The numerical aperture (NA) of the multimode optical fiber is preferably greater than the NA of the optical source directing signals into the fiber; for example, the NA of the optical fiber is preferably greater than the NA of a VCSEL source. The bandwidth of the multimode optical fiber varies inversely with the square of Δ1_{MAX}. For example, a multimode optical fiber with Δ1_{MAX} of 0.5% can yield a bandwidth 16 times greater than an otherwise identical multimode optical fiber except having a core with Δ1_{MAX} of 2.0%.

In some non-claimed embodiments, the core extends radially outwardly from the centerline to a radius R1, wherein 12.5 ≤ R1 ≤ 40 microns. In some embodiments, 25 ≤ R1 ≤ 32.5 microns, and in some of these embodiments, R1 is greater than or equal to about 25 microns and less than or equal to about 31.25 microns. The core preferably has a maximum relative refractive index, less than or equal to 1.0%. In other embodiments, the core has a maximum relative refractive index, less than or equal to 0.5%. Such multimode fibers preferably exhibit a 1 turn 10 mm diameter mandrel attenuation increase of no more than 1.0 dB, preferably no more than 0.5 dB, more preferably no more than 0.25 dB, even more preferably no more than 0.1 dB, and still more preferably no more than 0.05 dB, at all wavelengths between 800 and 1400 nm.

If non-periodically disposed holes or voids are employed in the depressed index annular region, it is desirable for the holes to be formed such that greater than 95% of and preferably all of the holes exhibit a mean hole size in the cladding for the optical fiber which is less than 1550 nm, more preferably less than 775 nm, most preferably less than about 390 nm. Likewise, it is preferable that the maximum diameter of the holes in the fiber be less than 7000 nm, more preferably less than 2000 nm, and even more preferably less than 1550 nm, and most preferably less than 775 nm. In some embodiments, the fibers disclosed herein have fewer than 5000 holes, in some embodiments also fewer than 1000 holes, and in other embodiments the total number of holes is fewer than 500 holes in a given optical fiber perpendicular cross-section. Of course, the most preferred fibers will exhibit combinations of these characteristics. Thus, for example, one particularly preferred embodiment of optical fiber would exhibit fewer than 200 holes in the optical fiber, the holes having a maximum diameter less than 1550 nm and a mean diameter less than 775 nm, although useful and bend resistant optical fibers can be achieved using larger and greater numbers of holes. The hole number, mean diameter, max diameter, and total void area percent of holes can all be calculated with the help of a scanning electron microscope at a magnification of about 800X and image analysis software, such as ImagePro, which is available from Media Cybernetics, Inc. of Silver Spring, Maryland, USA.

The multimode optical fiber disclosed herein may or may not include germania or fluorine to also adjust the refractive index of the core and or cladding of the optical fiber, but these dopants can also be avoided in the intermediate annular region and instead, the holes (in combination with any gas or gases that may be disposed within the holes) can be used to adjust the manner in which light is guided down the core of the fiber. The hole-containing region may consist of undoped (pure) silica, thereby completely avoiding the use of any dopants in the hole-containing region, to achieve a decreased refractive index, or the hole-containing region may comprise doped silica, e.g. fluorine-doped silica having a plurality of holes.

The numerical aperture (NA) of the optical fiber is preferably greater than the NA of the optical source directing signals into the fiber; for example, the NA of the optical fiber is preferably greater than the NA of a VCSEL source. The bandwidth of the multimode optical fiber varies inversely with the square of Δ1_{MAX}. For example, a multimode optical fiber with Δ1_{MAX} of 0.5% can yield a bandwidth 16 times greater than an otherwise identical multimode optical fiber except having a core with Δ1_{MAX} of 2.0%.

In some non-claimed embodiments, the core outer radius, R₁, is preferably not less than 12.5 µm and not more than 40 µm, i.e. the core diameter is between about 25 and 80 µm. In other embodiments, R1 > 20 microns; in still other embodiments, R1 > 22 microns; in yet other embodiments, R1 > 24 microns.

Methods of making such optical fibers with holes is described in U.S. Patent Application Serial No. 11/583098, filed October 18, 2006, and U.S. Provisional Patent No. 60/879,164, filed January 8, 2007.

Many modifications and other embodiments of the present invention, within the scope of the appended claims, will become apparent to a skilled artisan. Therefore, it is to be understood that the invention is not to be limited to the specific embodiments disclosed herein and that modifications and other embodiments may be made within the scope of the appended claims. Although specific terms are employed herein, they are used in a generic and descriptive sense only and not for purposes of limitation.

## Claims

1. An optical cable, comprising:
a single tight buffered optical fiber (110, 210);
a single buffer tube (120, 220) formed from a thermoplastic polymer material including polyvinyl chloride surrounding the tight buffered optical fiber (110, 210), a gap (130, 230) being established between the tight buffered optical fiber (110, 210) and the buffer tube (120, 220), wherein the gap (130, 230) between the tight buffered optical fiber (110, 210) and the buffer tube (120, 220) is between 40 µm and 100 µm; and
a jacket (150, 250) comprising polyvinyl chloride surrounding the buffer tube (120, 220), wherein a specific relationship exists between the buffer tube (120,220) and the jacket (150, 250) that is defined by a cross section area of the jacket (150, 250) being about four times the cross section area of the buffer tube (120, 220) and the buffer tube (120, 220) having an elasticity modulus in the range of 3500 N/mm² to 4000 N/mm² that is more than four times an elasticity modulus of the jacket (150, 250) in the range of 800 N/mm² to 990 N/mm², wherein a thickness of the buffer tube (120, 220) is in a range between 0.25 mm to 0.75 mm and a thickness of the jacket (150, 250) is in a range between 0.5 mm and 1 mm,
wherein the cable has an attenuation of 0.1 dB / turn or less when the cable is looped in a radius of 5 mm, and wherein the cable has an outer diameter from 4 mm to 5 mm.

2. The optical cable of claim 1, wherein the tight buffered optical fiber (110, 210) is a bend performance optical fiber.

3. The optical cable of claim 2,
wherein the buffer tube (120, 220) has a thermal expansion coefficient between 30 x 10⁻⁶ % to 80 x 10⁻⁶ % change of length per temperature change of 1K.

4. The optical cable of claims 1-3, further comprising:
strength member elements (140, 240) disposed between the buffer tube (120, 220) and the jacket (150, 250), wherein the strength member elements (140, 240) are bonded to the jacket (150, 250).

5. The optical cable of claim 4,
wherein an adhesion promoter is disposed on the surface of the strength member elements (140, 240).

6. The optical cable of any one of claims 1-5,
wherein a foamed filling material is placed between the optical fiber (110, 210) and the buffer tube (120, 220).

## Patentansprüche

1. Optisches Kabel, Folgendes aufweisend:
eine einzelne, dicht gepufferte optische Faser (110, 210);
eine einzelne Pufferröhre (120, 220), die aus einem Polyvinylchlorid enthaltenden thermoplastischen Polymermaterial gebildet ist und die dicht gepufferte optische Faser (110, 210) umgibt, wobei ein Zwischenraum (130, 230) zwischen der dicht gepufferten optischen Faser (110, 210) und der Pufferröhre (120, 220) hergestellt ist, wobei der Zwischenraum (130, 230) zwischen der dicht gepufferten optischen Faser (110, 210) und der Pufferröhre (120, 220) zwischen 40 µm und 100 µm beträgt;
einen Polyvinylchlorid umfassenden Mantel (150, 250), der die Pufferröhre (120, 220) umgibt, wobei ein spezifisches Verhältnis zwischen der Pufferröhre (120, 220) und dem Mantel (150, 250) besteht, das dadurch festgelegt ist, dass eine Querschnittsfläche des Mantels (150, 250) ca. ein Vierfaches der Querschnittsfläche der Pufferröhre (120, 220) beträgt und die Pufferröhre (120, 220) ein Elastizitätsmodul im Bereich von 3500 N/mm² bis 4000 N/mm² hat, das mehr als ein Vierfaches eines Elastizitätsmoduls des Mantels (150, 250) im Bereich von 800 N/mm² bis 990 N/mm² beträgt,
wobei eine Dicke der Pufferröhre (120, 220) im Bereich zwischen 0,25 mm und 0,75 mm liegt, und eine Dicke des Mantels (150, 250) in einem Bereich zwischen 0,5 mm und 1 mm liegt,
wobei das Kabel eine Dämpfung von 0,1 dB/Windung oder weniger hat, wenn das Kabel in einem Radius von 5 mm zu einer Schleife gelegt ist, und wobei das Kabel einen Außendurchmesser von 4 mm bis 5 mm hat.

2. Optisches Kabel nach Anspruch 1, wobei die dicht gepufferte optische Faser (110, 210) eine optische Faser mit Biegefähigkeit ist.

3. Optisches Kabel nach Anspruch 2,
wobei die Pufferröhre (120, 220) einen Wärmeausdehnungskoeffizienten zwischen 30 x 10⁻⁶ % und 80 x 10⁻⁶ % Längenveränderung pro Temperaturveränderung von 1 K hat.

4. Optisches Kabel nach den Ansprüchen 1 bis 3, darüber hinaus aufweisend:
Festigkeitsträgerelemente (140, 240), die zwischen der Pufferröhre (120, 220) und dem Mantel (150, 250) angeordnet sind, wobei die Festigkeitsträgerelemente (140, 240) an den Mantel (150, 250) gebunden sind.

5. Optisches Kabel nach Anspruch 4,
wobei ein Haftvermittler an der Oberfläche der Festigkeitsträgerelemente (140, 240) angeordnet ist.

6. Optisches Kabel nach einem der Ansprüche 1 bis 5,
wobei ein geschäumtes Füllmaterial zwischen der optischen Faser (110, 210) und der Pufferröhre (120, 220) eingesetzt ist.

## Revendications

1. Câble optique, comprenant :
une fibre optique à structure serrée unique (110, 210) ;
une tube tampon unique (120, 220) composé d'un matériau polymère thermoplastique incluant du chlorure de polyvinyle entourant la fibre optique à structure serrée (110, 210), un espace (130, 230) étant établi entre la fibre optique à structure serrée (110, 210) et le tube tampon (120, 220), sachant que l'espace (130, 230) entre la fibre optique à structure serrée (110, 210) et le tube tampon (120, 220) est compris entre 40 µm et 100 µm ;
et une gaine (150, 250) comprenant du chlorure de polyvinyle entourant le tube tampon (120, 220), sachant qu'il existe entre le tube tampon (120, 220) et la gaine (150, 250) un rapport spécifique qui est défini par une aire de section transversale de la gaine (150, 250) étant d'environ quatre fois l'aire de section transversale du tube tampon (120, 220) et le tube tampon (120, 220) présentant un module d'élasticité compris dans la plage de 3500 M/mm² à 4000 N/mm² qui est plus de quatre fois un module d'élasticité de la gaine (150, 250) dans la plage de 800 N/mm² à 990 N/mm², sachant qu'une épaisseur du tube tampon (120, 220) est comprise dans une plage entre 0,25 mm et 0,75 mm et une épaisseur de la gaine (150, 250) est comprise dans une plage entre 0,5 mm et 1 mm,
sachant que le câble a une atténuation de 0,1 dB / tour ou moins lorsque le câble est enroulé dans un rayon de 5 mm, et sachant que le câble a un diamètre extérieur allant de 4 mm à 5 mm.

2. Le câble optique de la revendication 1, sachant que la fibre optique à structure serrée (110, 210) est une fibre optique à capacité de courbure.

3. Le câble optique de la revendication 2,
sachant que le tube tampon (120, 220) a un coefficient de dilatation thermique compris entre 30 x 10⁻⁶ % à 80 x 10⁻⁶ % de changement de longueur par changement de température de 1 K.

4. Le câble optique des revendications 1 à 3, comprenant en outre :
des éléments de renfort (140, 240) disposés entre le tube tampon (120, 220) et la gaine (150, 250), sachant que les éléments de renfort (140, 240) sont liés à la gaine (150, 250).

5. Le câble optique de la revendication 4,
sachant qu'un promoteur d'adhésion est disposé sur la surface des éléments de renfort (140, 240).

6. Le câble optique de l'une quelconque des revendications 1 à 5,
sachant qu'un matériau de remplissage moussé est placé entre la fibre optique (110, 210) et le tube tampon (120, 220).
